# EUROPEAN PATENT APPLICATION

(11) **EP 1 205 118 A2**
(43) Date of publication of application: **15.05.2002**
(21) Application number: 01126247.4
(22) Date of filing: 05.11.2001
(51) Int. Cl.: A23L 1/32, A23B 5/005, A23B 5/015

(54) **Method and equipment for processing egg products**

(30) Priority: 07.11.2000 IT TO001044
(71) Applicant: EGG Plus Engineering Di Fantolino Claudio, 10147 Torino (IT)
(72) Inventor: Fantolino, Claudio, 10147 Torino (IT)
(74) Representative: Robba, Pierpaolo

(57) **Abstract**

Method for processing egg products and similar, intended for alimentary use, wherein a deaeration phase is provided for reducing the content of gases favouring the bacteria overgrowth, wherein said deaeration phase is carried out at a temperature ranging between 15 and 25°C. Moreover, the invention relates to an equipment for actuating said method, said equipment comprising a degassing station (31) provided with at least a degassing tank (311,312) equipped with at least a vertical pipe (314,316) for extracting gas by means of a vacuum pump, said pipe presenting such a diameter and such a height to cause the fall into the tank of the froth possibly formed during the degassing phase.

## Description

The object of the present invention is a method for processing egg products and similar, intended for alimentary use, and an equipment carrying out said method.

The products derived from eggs, like yolk, albumen and whole egg, are largely used in the industry and in the food craft, in the sectors of ice-creamery, confectionery, fresh pastry, gastronomy, and so on.

Nowadays, the transport, distribution and production needs on an industrial scale make it necessary to preserve said products derived from eggs for a relatively long time before their utilisation.

Clearly, a longer life of the period of time during which such products can be preserved without any appreciable alteration in their organoleptic and bacteriologic properties is a characteristic determining the appreciation of the product from the artisans and the industrial users.

For this reason, some techniques have been developed in the past for treating products derived from eggs, in order to allow to prolong the shelf-life of said products.

One of said techniques is based on the hurdle technology which was developed by L Leister in the years '70 for preserving food.

In the treatment of the food product, said technology provides for the use of hurdles forming a series of successive or simultaneous barriers against the bacteria development in the product itself.

In this way, by using a combination of different hurdles, it will be possible to obtain a longer life of the period of time during which the product can be preserved and its qualitative characteristics can be maintained nearly unaltered.

The hurdles generally used in the processing of products derived from the eggs consist in treatments of pasteurisation, deaeration and germicidal action of UVC ultraviolet rays (2537 Å).

Methods and equipments intended for obtaining products derived from eggs for alimentary use are described, for instance, in the Italian patents 1188729 and 1227134.

However, one of the problems that are met in setting up the above mentioned technology derives from the difficulty of selecting the hurdles and the parameters of each hurdle in order to assure, on the one side, the obtaining of the stabilisation necessary to a long preservation of the product and, on the other side, the maintenance of those qualitative and nutritional characteristics appreciated by the consumers.

For instance, the equipments processing the egg products by means of the ultrapasteurisation method (temperatures of 70-72 °C for a time of 30-40 min) coupled with the system of aseptic packaging, give as a result a duration of some weeks, yet to the detriment of the characteristics of the egg products themselves due to the high denaturations induced on proteins and caused by the use of high temperatures.

Therefore it is an object of the present invention to provide a method and an equipment for processing products derived from eggs and similar, intended for alimentary use, which allow to obtain a final product provided with optimal alimentary characteristics and as much similar to the starting natural product, said final product being preservable much longer than the products obtained by means of the methods and equipments still used.

This and other objects are obtained by means of a method and an equipment as claimed in the hereby attached claims.

The products obtained through the method and the equipment according to the present invention, either derived from the albumen, the yolk or a combination of both, or derived form a mixture of the same with other alimentary substances (e.g. sodium chloride, saccharose, etc.) present, at a temperature of 0+4°C, a shelf-life greater than 40 days. During all this time, said products maintain values of bacteria concentration well lower than those provided by the current European and United States regulations for the products derived from eggs, and are thus in a position of high alimentary safety in agreement with the provisions of the current regulations HACCP (Hazard Analysis and Critical Control Point).

The invention will be now described with reference to the attached drawings showing preferred and non-limiting embodiments of the invention, wherein:
- figure 1 is a flowchart showing the various phases of the method according to the invention;
- figure 2 is a block diagram of the equipment according to the invention.

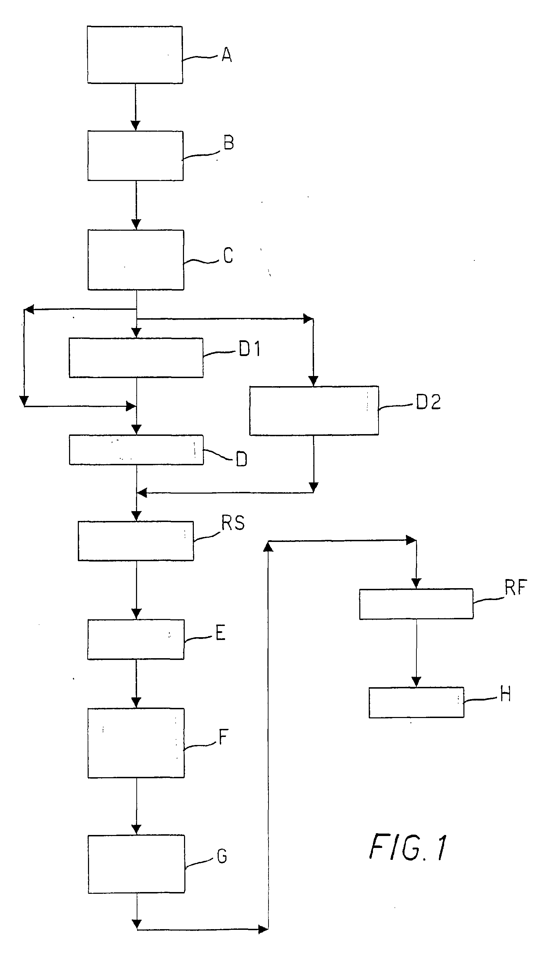

With reference to the flowchart of figure 1, a method for processing the egg products generally comprises the phases of:
A) washing and disinfecting the shells;
B) breaking the shells;
C) separating the yolk from the albumen (optional);
D) pasteurising;
E) deaerating;
F) mixing gases;
G) treating by means of UVC rays;
H) storing.

The cycle phases intended to improve the preservation properties of the egg product, once it is separated from the shell, are an object of the present invention.

Said phases range from the pasteurisation phase D) to the storing phase H).

In the continuation of the description, we will only deal with said phases since the other phases can be substantially carried out according to the teaching of the prior art.

As it is known, the pasteurisation phase D is provided by the regulations relative to the processing of food products in force in almost all countries.

The pasteurisation may be obtained through one of the available technologies according to the prior art like, for instance, the laminar flow or tubular flow pasteurisation, the pasteurisation with scraped surface, ohmic heating or microwave exchangers and so on.

The pasteurisation represents a first hurdle against the bacteria reproduction, but, in the case of egg products, it is not sufficient alone to assure that the product lasts more than 5-10 days.

The pasteurisation phase D can be coupled with, D1, or preceded by, D2, a homogenisation treatment in order to assure a better thermal effect on the product.

Moreover, the homogenisation will allow to reduce the fouling of the pasteuriser.

According to the invention, the pasteurisation is obtained by maintaining the processed products at a temperature ranging between approximately 58°C and 68°C for a duration ranging between approximately 2,5 and 4,5 minutes (thermal dwell time or thermal death of the bacteria).

More precisely, the use of a temperature of 58°C for the albumen, 65°C for the yolk and 66°C for the whole egg, has turned out to be particularly effective.

Besides, for the reasons which will turn out to be more clear in the following, always according to the invention, the products leaving the pasteurisation phase will preferably have a temperature ranging between approximately 15°C and 25°C, lower for the whole egg and albumen and greater for the yolk, rather than approximately 0+4°C as it occurs according to the prior art.

The temperature of approximately 15-25°C, required for the product leaving the pasteuriser can also be obtained through a successive heating phase RS.

A deaeration phase E is provided downstream of the pasteurisation phase D.

In order to assure a longer shelf-life, the deaeration phase E is a fundamental phase in the processing of the egg product.

In fact, the egg shell presents a structure rich in pores (up to 6000) allowing an internal-external gaseous exchange wherein, with the passing of time, moisture and carbon dioxide are lost towards outside, while oxygen can penetrate inside.

Moreover, in the various processing phases preceding the pasteurisation, like for instance the breaking of the shells, the possible separation of the yolks from the albumen and so on, the egg product comes into contact with ambient air and, consequently, can incorporate further gases.

Among said gases, the most harmful is certainly oxygen which, if present in the processed product, will cause oxidations, enzymatic degradations, and above all it will be vital food for all aerobe bacteria.

Therefore it is fundamental to eliminate the gases dissolved into the egg product, first of all oxygen, as well as, for the same reasons, the excess of small parts of free water a_{w}.

The deaeration is obtained by means of an equipment able to produce a certain degree of vacuum inside one or more tanks into which the egg product passes.

In this way, the mixture of existing gases and small parts of free water a_{w} are eliminated from the processed product.

In order to obtain an effective deaeration of the egg product, it is known to stir the liquid product into which the gases are dissolved. In this way, in an ambient subject to suction, the gases release is increased.

This technique is used in the method described in the Italian patent 1188729 according to which gas is extracted from the liquid product also thanks to the presence of blade stirrers housed in containers into which the egg product passes.

A problem which is met during the deaeration phase is due to the fact that a certain quantity of froth is generated during the gases release from the liquid product as an effect of the suction.

In the equipment according to the Italian patent 1188729, the froth production is further induced by the presence of the blade stirrers.

The presence of froth represents a problem for the successive processing of the product that shall be transferred for the further working phases, preferably in a liquid form.

Besides, if the froth exceeds a certain level, it can rise through the suction pipes for producing vacuum and seriously damage the vacuum pumps.

In the past, this problem has been solved by means of mechanical arrangements like, for instance, froth-breaking grids positioned between the zone where the level of the liquid stabilises and the suction pipes.

However, the grids and the stirrers represent a complication in the equipment and increase the risk of bacteriologic contamination for the possibility that the liquid may flow through the seals positioned in correspondence with the shafts moving the stirrer blades.

According to the present invention, it has been advantageously provided to maintain the temperature of the liquid product during the deaeration phase E at an optimal value of 15-25°C, so as to obtain a better gas extraction from the liquid product, without using any stirrer.

This result is made possible thanks to the gas properties of being soluble in liquids in an inversely proportional way to an increase in temperature.

The "hot" deaeration phase according to the invention provides, at the end, for restoring the ambient pressure by adding gases N₂ or CO₂ or a mixture of them.

Always in this phase, it is on the contrary excluded the use of filtered and/or sterile air, which is more economical but also contains oxygen.

Subsequently, the product undergoes the phase F wherein a certain quantity of gases N₂ or CO₂ or a mixture of them is dissolved into the product.

Preferably, the added gas will be CO₂ or a mixture containing CO₂ because it has been found that the carbon dioxide, that partially dissolves into the liquid product in the form of carbonic acid, contributes to slightly decrease the pH. This fact, together with the germicide action of the UVC lamps, helps to further inhibit the bacteria development.

Naturally, the gas partially dissolved into the product as carbonic acid must be considered as a processing aid and not as an addition agent because, in the phase of utilisation of the product, it returns to the gaseous phase and easily releases from the product itself.

The successive phase G consists in treating the liquid product, which has been degassed and to which gas containing N₂ or CO₂ or a mixture of them has been added, by means of germicide UVC lamps.

Said treatment can occur, for instance, in an equipment of the type described in the Italian patent 1227134.

The germicide treatment with UVC lamps represents a further hurdle in the bacteria growing path because it induces a degradation in the cytoplasm of the bacteria themselves.

At the end of the phase G of the UVC treatment, the product temperature is preferably brought back, in a cooling phase RF, to lower values of approximately 0+4°C, in order to allow to a part of the gas blown into the product to remain dissolved into it and, moreover, in order to minimise the possible bacterial overgrowth.

The temperature of 0+4°C is also the temperature provided by the current CE regulations on the preservation of fresh egg products.

At the end of the phase G of the UVC treatment, the product undergoes a storage phase H.

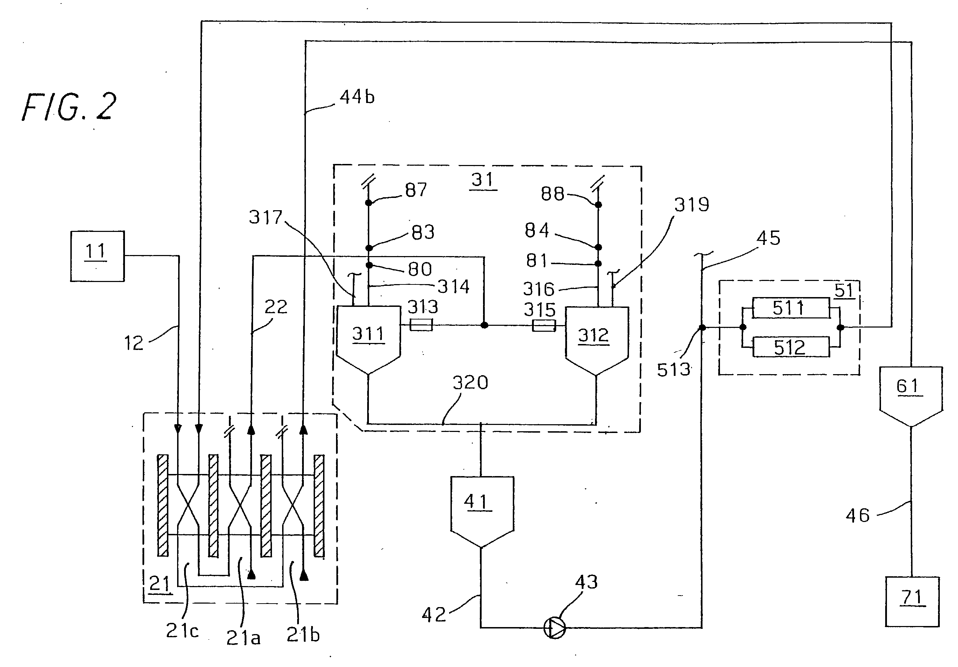

With reference to figure 2, a preferred embodiment of the equipment object of the present invention, as regards the phases ranging from the pasteurisation to the storing before the packaging, will be described.

In figure 2 the pasteurisation station 11 is shown, from which the liquid product is sent through a pipe 12 to a heat exchanger 21 in order to be brought to a temperature ranging between 15-25°C before undergoing a degassing phase.

The product leaving the heat exchanger 21 is sent through a pipe 22 to the degassing station 31.

The pasteuriser can also be suitably modified in order to obtain at its outlet a product at the required temperature of 15-25°C, thus avoiding the necessity of an exchanger positioned downstream of the pasteuriser, or the exchanger could also be incorporated into the pasteurisation station itself.

The degassing station 31 incorporates a pair of tanks 311 and 312 which work alternately for assuring the operation continuity of the productive cycle.

The cycle is automatically controlled by a PLC or by a computer connected with the machine.

The capacity of the tanks 311 and 312 will be obviously adapted to the equipment flow rate (for instance, for a flow rate of 1000 l/h the capacity of the tanks will be of at least 50 I).

If the degassing station 31 only provides for one tank, the equipment operation, although possible, would prove to be discontinuous and this would penalise the productive capacity which would not be acceptable in many cases.

Advantageously, the tanks 311 and 312 will not have any stirrers, but will be provided with pipes for extracting air. The air extraction preferably occurs through a vacuum pump, for instance of the type with blades and oil-lubricated, respectively 314 and 316, with a large diameter of approximately 70 mm and of a considerable length of approximately 2 m.

The degree of vacuum obtained inside the tanks will typically range between approximately -0,7 and -0,9 bar according if it is about yolk, albumen or the whole egg.

Thank to said arrangement, during the deaeration phase, the froth will break and will fall due to the gravity inside the tanks 311 and 312.

It has been observed that the residual safety volume that must remain free in the tanks 314,316, in order to avoid the formation of froth, must be of at least 15-25 I.

According to the invention, as the ambient pressure inside said residual free volume must be restored by adding gas, it is clear that smaller will be said volume, smaller will be the gas consumption of the equipment.

In this way, thanks to the long and of big diameter pipes, it has been possible to limit the free volume after having filled approximately 1/3 of the capacity of the tanks, with clear advantages in the economy of the plant operation.

The degassing station 31 further provides for a pair of valves 313,315 for piping alternately to the tank 311 or to the tank 312 the liquid product to be treated.

Moreover, each tank 311,312 will be provided with an inlet 317,319 for a gas intended to restore the pressure inside the tanks to the level of the ambient pressure, a condition necessary to let the product flow from the tanks themselves.

Said gas can preferably be CO₂ or N₂ or a mixture of them.

An outlet pipe 320 provides for piping the liquid product coming alternately from the two tanks 311,312 to a tank 41 having the function of a plenum chamber able to assure the continuity in the process.

Always referring to the degassing station, the extraction air pipes 314,316 will be advantageously provided with corresponding probes 80 and 81 that, if reached by froth, will activate a first alarm level with visual and acoustic signalling to the operator through an alarm (not shown).

When the first alarm threshold is reached, a valve provides for reducing the degree of vacuum inside the corresponding pipe 314 or 316, while awaiting the intervention of the operator that can manually reduce the vacuum level.

An automatic device, controlled by a PLC or by a computer, can be provided as well for carrying out said operation and the following described ones without the operator intervention.

A second alarm level is provided in the case that the froth level further rises into the pipes 314,316 until it reaches a second probe 83,84.

Besides the visual and acoustic signalling, the second alarm level provides for the stopping of the vacuum pump and for the vacuum discharge through appropriate valves.

A third alarm level is provided when, due to the failure of the previous probes 80,81 and 83,84 or due to the excessive flow rate of product coming from the pasteurisation station, the froth reaches a third probe 87,88.

Besides what is provided for the second level, the third alarm level provides also for the discharge through a valve of the vacuum existing in the pipes leading to the vacuum pump.

A vacuum trap is also provided for saving the vacuum pump against possible presence of froth or product dragged into the pipes.

Moreover, the degassing station is further equipped with a safety system (maximum emergency) than can be manually activated through a push button or automatically activated. At the same time, said safety system allows the stopping of the vacuum pump, the disabling of the cycle operation of the tanks 311,312, and the opening of all the inlet and outlet valves, in order to let pass the product into the station 31 without undergoing any other processing until the productive cycle is restored.

From the tank 41 the product is sent to the UVC treatment station 51 through the pipe 42.

The transfer of the product through the pipe 42 is obtained thanks to a peristaltic pump 43 assuring a "smooth" passage of the liquid product.

Before directing the product to the UVC treatment phase in correspondence with the station 51, to the product is preliminary mixed some gas, preferably CO₂ or N₂ or a mixture of them. The presence of said gas represents a further barrier to the bacteria overgrowth.

Besides, the addition of CO₂ before the UVC germicide treatment reduces the oxidation effect of ozone emanating during the UVC treatment.

According to the invention, the mixing of said gas occurs through a gas pipe 45 immediately before the equipment 511,512 for the ionisation treatment, in correspondence with the fitting 513 of the pipe 42.

The equipment 511,512 can be for instance obtained according to the teaching of the Italian patent 1227134 by means of a pair of steel tubes, arranged in parallel, inside which is coaxially housed a corresponding tube transparent to ultraviolet rays, preferably quartz, internally provided with low pressure UVC lamps (for instance at least a lamp at 2537 Å), in order to define an interspace for the passage of the egg products.

When leaving the station 51, the product is sent through the pipe 44a,44b to a storage tank 61 insulated for maintaining the product at an ideal temperature before the packaging.

From the tank 61 the product will be sent through a pipe 46 to the packaging station 71.

In the packaging station 71 the product is generally packaged in rigid containers, like for instance bottles, or soft containers, like for instance bags.

According to the invention, if the product obtained through the described method is bottled, the bottles will be preliminarily saturated with CO₂ that, being heavier than air, will be expulsed from the bottle only during the filling.

In this way, the contact between the product and air will turn out to be minimised, as well as the risk of bacterial overgrowth.

However, always according to the invention, the product leaving the station 51, before being temporarily stored in the tank 61, is cooled down to the temperature of approximately 0+4°C.

This arrangement allows to maintain dissolved into the product a greater quantity of preliminary blown-in gas, thereby assuring a longer life of the packaged product and besides assuring a lower bacterial overgrowth due to the low temperature.

According to the invention, cooling is advantageously obtained through the same exchanger 21 which will be subdivided in three stages, respectively a cooling stage 21a, a heating stage 21b and a recovery stage 21c wherein the cold product coming from the pasteuriser 11 will be first conduction-heated thanks to the hot product leaving the UVC station 51.

On the contrary, if the heat exchanger 21 is provided only for cooling the product leaving the UVC station, since the product leaving the pasteurisation station is already at the requested temperature of 15-20°C, said exchanger can be of a simple type with a single stage (exchange product - freezing water).

Moreover, advantageously, gases CO₂ or N₂ or a mixture of them are constantly blown into the tanks 41 and 61 during all the process, in order to avoid any contact between the treated product and the atmosphere.

Appropriate washing cycles are provided in order to maintain the clean conditions required within the tanks and the pipes after each usage cycle of the plant.

## Claims

1. Method for processing egg products and similar, intended for alimentary use, wherein a deaeration phase is provided for reducing the content of gases favouring the bacteria overgrowth inside the product, **characterised by** the fact that said deaeration phase is carried out "hot" at a temperature greater than 0+4°C.

2. Method according to claim 1, wherein the temperature of the product subject to deaeration ranges between 15 and 25°C.

3. Method according to claims 1 or 2, wherein said deaeration phase is carried out in absence of forced mechanical agitation.

4. Method according to claim 1 or 2, wherein a pasteurisation phase preceding the deaeration phase is further provided.

5. Method according to claim 4, wherein said pasteurisation phase is carried out at a temperature ranging between approximately 58°C and 68°C for a time ranging between 2,5 and 4,5 minutes.

6. Method according to claim 5, wherein, between said pasteurisation phase and said deaeration phase, a phase is provided wherein the treated product is subject to a heating for bringing its temperature to approximately 15-25°C.

7. Method according to claim 6, wherein the temperature, during said pasteurisation phase, is maintained at 58°C if the treated product is albumen, 65°C if it is yolk and 66°C if it is the whole egg.

8. Method according to anyone of the preceding claims, wherein, subsequently to the deaeration phase, the product is subject to a treatment phase with UVC ultraviolet rays.

9. Method according to claim 8, wherein, subsequently to the treatment phase with UVC ultraviolet rays the treated product is subject to cooling for bringing its temperature to approximately 0+4°C.

10. Equipment for carrying out the method according to anyone of the claims 1 to 9, comprising a degassing station (31) provided with at least a degassing tank (311,312) including at least a substantially vertical pipe (314,316) for extracting gas by means of a vacuum pump, wherein said pipe presents such a diameter and such a height to cause the fall into the tank (311,312) of the froth possibly formed during the degassing phase, so avoiding that said froth rises into the pipe (314,316).

11. Equipment according to claim 10, wherein said pipe (314,316) presents a length of approximately 2 m and a diameter of at least 70 mm.

12. Equipment according to claim 10 or 11, wherein a heat exchanger (21) is provided for bringing the temperature of the product to be treated to approximately 15-25°C before entering the degassing station (31).

13. Equipment according to claim 10, wherein a station (51) is further provided for treating the product by means of UVC ultraviolet rays.

14. Equipment according to claim 13, wherein a heat exchanger (21) is provided for bringing the temperature of the product leaving the UVC ultraviolet rays treatment station (51) to approximately 0+4°C before temporarily storing the product before packaging.

15. Equipment according to claim 12 and 14, wherein said heat exchanger (21) is a triple stage heater comprising a heating portion (21a), a cooling portion (21b) and a recovery heat portion (21c).

16. Equipment according to claim 10, wherein said vertical pipe (314,316) incorporates at least a safety probe (80,81,83,84,87,88) for activating an alarm signal when some froth forms inside the pipe (314,316).

17. Equipment according to claim 16, wherein said probes are in a number of three and correspond, respectively, to a first, to a second and to a third alarm level (80,81,83,84,87,88).

18. Equipment according to claim 17, wherein said alarm levels comprise a first level of acoustic and visual alarm and reduction of the degree of vacuum inside the pipe (314,316), a second alarm level wherein, in addition, the vacuum pump is stopped, and a third alarm level wherein, in addition, the ambient pressure inside the pipe (314,316) is restored.
